**Europäisches Patentamt**

**European Patent Office**

**Office européen des brevets**

(19)

(11) Veröffentlichungsnummer: **0 029 989**
**A1**

(12) # EUROPÄISCHE PATENTANMELDUNG

(21) Anmeldenummer: **80107323.0**

(22) Anmeldetag: **24.11.80**

(51) Int. Cl.³: **G 01 S 3/78**

(30) Priorität: **28.11.79 DE 2947782**

(43) Veröffentlichungstag der Anmeldung:
**10.06.81 Patentblatt 81/23**

(84) Benannte Vertragsstaaten:
**BE CH FR GB IT LI NL**

(71) Anmelder: **SIEMENS AKTIENGESELLSCHAFT Berlin und München**
**Postfach 22 02 61**
**D-8000 München 22(DE)**

(72) Erfinder: **Rösch, Hansjörg, Dipl.-Ing.**
**Am Kirchsteig 2**
**D-8911 Hofstetten/Ammersee(DE)**

(54) Einrichtung zur Entdeckung und Identifizierung von Hubschraubern.

(57) Im Gefechtsfeld in Bodennähe fliegende oder schwebende Hubschrauber werden durch passive Ortung der durch die umlaufenden Rotorblätter modulierten Wärmestrahlung mittels einer Detektionseinrichtung entdeckt und identifiziert. Als Sensor der Detektionseinrichtung wird vorzugsweise ein ungekühlter pyroelektrischer Detektor verwendet, der abseits oder innerhalb eines zu überwachenden Geländeabschnitts in einer dreh- und schwenkbaren Aufnahmevorrichtung ebenerdig oder erhöht ortsfest aufgestellt oder fahrbar ausgebildet ist. Die aus dem Produkt von Drehzahl des Rotors und der Rotorblattzahl sich ergebende charakteristische Modulationsfrequenz der Wärmestrahlung wird zur Identifizierung des Hubschraubers ausgewertet.

EP 0 029 989 A1

SIEMENS AKTIENGESELLSCHAFT       Unser Zeichen
Berlin und München               VPA 79 P 6712 EUR

Einrichtung zur Entdeckung und Identifizierung von
Hubschraubern

Die Erfindung bezieht sich auf eine Einrichtung zur Entdeckung und Identifizierung von Hubschraubern, unter Ausnutzung der vom Hubschrauber ausgehenden Wärmestrahlung.

Hubschrauber, die insbesondere zur Panzerabwehr ausgebildet sind, stellen eine erhebliche Bedrohung für Kampfpanzer dar. Es wurde bereits vorgeschlagen, im Hinblick auf deren erfolgreiche Bekämpfung extrem tieffliegende und schwebende Hubschrauber bereits hinter Gelände- oder Bewuchsdeckungen zu entdecken und eine Bekämpfung bereits in diesem Stadium oder spätestens direkt bei Demaskierung, d. h. bei Auftauchen, durch eine Detektionseinrichtung zu ermöglichen, die mit wärmeempfindlichen Sensoren ausgestattet ist und die auf die durch die umlaufenden Rotorblätter des Hubschraubers modulierte Wärmestrahlung des Antriebsaggregates anspricht. Nach Auswertung der Wärmestrahlung in der Detektionseinrichtung werden Maßnahmen zur gelenkten Abwehr vor oder unmittelbar nach der Demaskierung des Hubschraubers eingeleitet.

Ha 1 Ath / 27.11.1979

Der Erfindung liegt die Aufgabe zugrunde, den Erfassungsraum der Detektionseinrichtung zu vergrößern und die Bekämpfung von Hubschraubern durch sichere Unterscheidung von Freund- und Feind-Hubschraubern zu beschleunigen.

Diese Aufgabe wird gemäß der Erfindung dadurch gelöst, daß die durch die umlaufenden Rotorblätter modulierte Wärmestrahlung des Antriebsaggregates und/oder die durch aerodynamische Erwärmung der Rotorblattspitzen erzeugte Wärmestrahlung mittels eines vorzugsweise als ungekühlter pyroelektrischer Detektor ausgebildeten Sensors, der in einer abseits oder innerhalb eines zu überwachenden Geländeabschnittes aufgestellten Aufnahmevorrichtung angeordnet ist, zur Entdeckung und Identifizierung von Hubschraubern ausgewertet wird.

Mit dieser Einrichtung können Hubschrauber im Gefechtsfeld entdeckt und identifiziert werden. Der für die Entdeckung eines in der Deckung befindlichen Hubschraubers vom Luftraum aus erforderliche Aufwand wird dabei wesentlich verringert. Außerdem ergibt sich der weitere Vorteil, daß die vom Boden aus rein passiv arbeitenden Detektionseinrichtungen vom Gegner nicht erkannt und nicht bekämpft werden können. Die Verwendung eines ungekühlten pyroelektrischen Detektors ermöglicht die Identifizierung eines entdeckten Hubschraubers in einfacher Weise durch Auswertung der durch das Produkt von Drehzahl des Rotors und Rotorblattzahl gegebenen charakteristischen Modulationsfrequenz der Wärmestrahlung.

Die Erfindung und weitere Ausgestaltungen der Erfindung werden anhand eines Ausführungsbeispieles näher beschrieben.

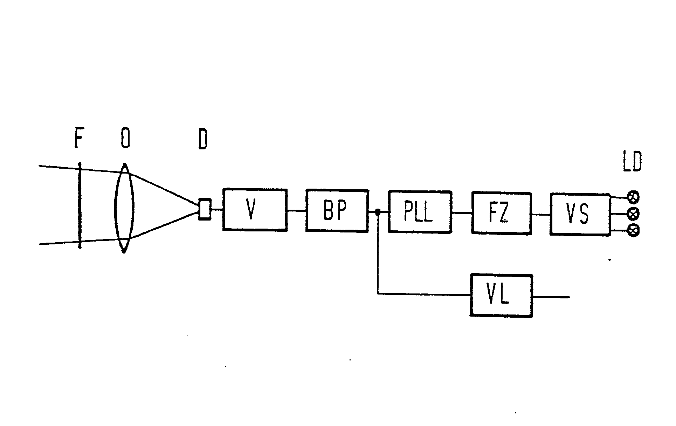

In der Figur ist ein Blockschaltbild des elektrischen Teils einer mit einem ungekühlten pyroelektrischen Detektor arbeitenden Detektionseinrichtung im Prinzip dargestellt. Zur Aufnahme und zur optimalen spektralen Ausfilterung der modulierten Wärmestrahlung sind eingangsseitig ein optisches Filter F und eine Optik O vorgesehen, welche die gebündelte Strahlung auf einen als pyroelektrischen Detektor ausgebildeten Sensor D projiziert. Der pyroelektrische Detektor spricht auf Ziele, die eine unmodulierte Wärmestrahlung abgeben, nicht an. Der pyroelektrische Detektor eignet sich in besonderer Weise auch für die Durchführung der Identifizierung eines entdeckten Hubschraubers.

Am Ausgang des pyroelektrischen Detektors D steht die charakteristische Modulationsfrequenz direkt zur Verfügung. Eine aufwendigere Signalverarbeitung zur Ausfilterung der Modulationsfrequenz, wie sie bei Verwendung von abtastenden Sensoren, z. B. Infrarot-Kameras erforderlich ist, kann hiermit umgangen werden.

Die Modulationsfrequenz wird nach Verstärkung in einem Verstärker V über einen Bandpaß BP geführt, dessen Bandbreite auf die in der Praxis vorkommenden Modulationsfrequenzen abgestimmt ist. An den Ausgang des Bandpasses schließt sicht eine phase-locked-loop-Schaltung an, die in Folge der Phasensynchronisation eine sehr geringe Bandbreite aufweist, eine erhebliche Verbesserung des Signal-Rauschverhältnisses bewirkt und den Empfänger sehr empfindlich macht. Das Ausgangssignal wird einem Frequenzzähler FZ zugeführt, der als Ausgangswert einen Zahlenwert liefert, und der in einer Vergleichsschaltung VS mit sogenannten Kennzahlen verglichen wird, die als Produkt aus Drehzahl und Blattzahl des Rotors der Identifizierung bekannter Hubschrauber dienen. Eine derart einfache Identifizierung wird dadurch ermöglicht, daß sich die Rotoren aller bekannten Hubschrauber in allen Betriebszuständen mit nahezu konstanter Drehzahl drehen. In Verbindung mit der Blattzahl des Rotors ergibt sich ein sicheres Erkennungsmerkmal.

Das Ergebnis des Vergleichs kann mittels Leuchtdioden LD optisch angezeigt werden und Aufschluß über den Typ des entdeckten Hubschraubers geben. Mit der beschriebenen Anordnung erfolgen Entdeckung und Identifizierung rein passiv.

Falls eine automatische Verfolgung von entdeckten Hubschraubern angestrebt wird, können die ausgebildeten Modulationsfrequenzen am Ausgang des Bandpasses BP einer Verfolge-Logik-Schaltung VL zugeführt werden. Mit dem Ausgangssignal erfolgt die Steuerung einer im Seiten- und Höhenwinkel schwenkbaren Aufnahmevorrichtung für den pyroelektrischen Detektor.

5 Patentansprüche
1 Figur

Patentansprüche

1. Einrichtung zur Entdeckung und Identifizierung von Hubschraubern, unter Ausnutzung der vom Hubschrauber ausgehenden Wärmestrahlung, d a d u r c h g e - k e n n z e i c h n e t , daß die durch die umlaufenden Rotorblätter modulierte Wärmestrahlung des Antriebsaggregates und/oder die durch aerodynamische Erwärmung der Rotorblattspitzen erzeugte Wärmestrahlung mittels eines vorzugsweise als ungekühlter pyroelektrischer Detektor ausgebildeten Sensors, der in einer abseits oder innerhalb eines zu überwachenden Geländeabschnittes aufgestellten Aufnahmevorrichtung angeordnet ist, zur Entdeckung und Identifizierung von Hubschraubern ausgewertet ist.

2. Einrichtung nach Anspruch 1, d a d u r c h g e - k e n n z e i c h n e t , daß die Aufnahmevorrichtung ebenerdig oder erhöht ortsfest aufgestellt oder fahrbar ausgebildet ist.

3. Einrichtung nach Anspruch 1 oder 2, d a d u r c h g e k e n n z e i c h n e t , daß die sich aus dem Produkt von Drehzahl des Rotors und der Rotorblattzahl ergebende charakteristische Modulationsfrequenz der Wärmestrahlung zur Identifizierung eines Hubschraubers mit einem pyroelektrischen Detektor ermittelt wird.

4. Einrichtung nach einem der vorhergehenden Ansprüche, d a d u r c h g e k e n n z e i c h n e t , daß der pyroelektrische Detektor in einer im Seiten- und Höhenwinkel schwenkbaren Aufnahmevorrichtung angeordnet ist.

5. Einrichtung nach einem der vorhergehenden Ansprüche, d a d u r c h g e k e n n z e i c h n e t , daß bei Auftauchen eines Hubschraubers die mittels eines

0029989

Bandpasses ausgefilterte Modulationsfrequenz in einer
Verfolge-Logik-Schaltung zur automatischen Nachführung
des Sensors benutzt wird.

F  O  D                                                              LD

⌐┐  [V]  [BP]  [PLL]  [FZ]  [VS] ⊗
                                              ⊗
                                              ⊗

[VL]

0029989

Nummer der Anmeldung

**EUROPÄISCHER RECHERCHENBERICHT**

Europäisches
Patentamt

EP 80 10 7323.0

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - A1 - 2 655 520 (ELTRO HMBH) <br> * Fig. 1 bis 5 * <br> -- | 1,2,4 |
| | US - A - 3 582 970 (R.E. WILLIAMS et al.) <br> * Fig. 1 bis 3 * <br> -- | 1 |
| A | US - A - 3 550 130 (H.R. SHAW) <br> * Fig. 1 bis 6 * <br> -- | |
| A | US - A - 3 177 362 (E.W. KUTZSCHER et al.) <br> * Fig. 1 bis 7 * <br> -- | |
| P | DE - A1 - 2 847 233 (LICENTIA PATENT-VERWALTUNGS-GMBH) <br> * Fig. 1 bis 5 * <br> ---- | |

### KLASSIFIKATION DER ANMELDUNG (Int. Cl.³)

G 01 S 3/78

### RECHERCHIERTE SACHGEBIETE (Int. Cl.³)

F 41 G 5/00
G 01 S 3/00

### KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X | Der vorliegende Recherchenbericht wurde für alle Patentansprüche erstellt.

| Recherchenort | Abschlußdatum der Recherche | Prüfer |
|---|---|---|
| Berlin | 20-02-1981 | BREUSING |

EPA form 1503.1 06.78